# EUROPÄISCHE PATENTANMELDUNG

(11) **EP 0 522 440 A2**
(43) Veröffentlichungstag der Anmeldung: **13.01.1993**
(21) Anmeldenummer: 92111179.5
(22) Anmeldetag: 02.07.1992
(51) Int. Cl.: G01M 3/36

(54) **Vorrichtung zur Prüfung der Dichtigkeit von mit Deckeln luftdicht verschlossenen Bechern**

(30) Priorität: 02.07.1991 DE 4121867
(71) Anmelder: GEA Finnah GmbH, D-48683 Ahaus (DE)
(72) Erfinder: Fehland, Jörn, D-2000 Hamburg 67 (DE); Grabnitzki, Burkhard, Dr., D-2000 Hamburg 76 (DE)
(74) Vertreter: Busse & Busse Patentanwälte

(57) **Zusammenfassung**

Die Vorrichtung zur Prüfung der Dichtigkeit von mit Deckeln (17) verschlossenen Bechern (11a-e), deren Seitenwände (16) und Deckel (17) aus elastisch verformbarem Material bestehen, umfaßt Klemmeinrichtungen (12a-e), die die Becherseitenwände (16) zeitweilig verformen, und den Becherdeckeln (17) zugeordnete Meßeinrichtungen (20), die den Grad der Deckelwölbung während der zeitweiligen Verformung der Becher messen. Jede Klemmeinrichtung (12ae) weist mehrere ortsfeste Klemmelemente (13a-e, 13a'-e') auf, deren Abstand zueinander zumindest bereichsweise geringer ist als der Außendurchmesser der Becher (11a-e) im gewünschten Verformungsbereich. Ferner sind Fördermittel (18) vorgesehen, die die Becher (11a-e) zur zeitweiligen Verformung zwischen die Klemmglieder (13a-e, 13a'-e') bewegen, wobei Haltevorrichtungen (23) die Becher (11ae) während des Meßvorganges in korrekter Meßstellung halten.

## Beschreibung

Die Erfindung betrifft eine Vorrichtung nach dem Oberbegriff des Anspruchs 1.

Aus der DE 37 16 095 C1 ist eine Vorrichtung bekannt, bei der die Klemmeinrichtung aus Klemmbacken besteht, die paarweise einander zugeordnet sind und bei einer gegenläufigen Schließbewegung die taktweise zwischen diese Klemmbacken geführten Becher zusammendrücken. Dadurch erfahren die Becherseitenwände eine Verformung, die über einen bestimmten Zeitraum aufrechterhalten wird. Mit einem auf dem Becherdeckel aufsetzenden Taster einer Meßeinrichtung wird die Aufwölbung des Deckels während der Verformungszeit zeitabhängig erfaßt. Erreicht die Aufwölbung ein vorgegebenes Maß und bleibt die Aufwölbung über die Verformungszeit gleich, ist der Becher ordnungsgemäß verschlossen. Diese Vorrichtung weist eine große Anzahl von bewegten Teilen auf und ist dementsprechend störanfällig sowie in der Herstellung aufwendig. Die Prüfgenauigkeit läßt zu wünschen übrig, da für die Verformung der Becher nur eine sehr kurze, von der Taktzeit des Becherfüllwerkes abhängige Zeitspanne zur Verfügung steht.

Aufgabe der Erfindung ist es, eine Vorrichtung zu schaffen, die besonders einfach ist und mit höherer Genauigkeit arbeiten kann.

Gelöst wird diese Aufgabe durch eine Vorrichtung mit den Merkmalen des Anspruchs 1.

Die Vorrichtung nach der Erfindung kommt mit wenigen einfachen Vorrichtungsteilen für die Ausführung der Verformung aus und ermöglicht durch entsprechende Gestaltung der Länge des Verformungsbereiches die Durchführung der Prüfung während einer die Taktzeit eines Becherfüllwerkes erheblich überschreitenden Zeitspanne. Hierdurch kann eine wesentlich größere Prüfgenauigkeit erzielt werden.

Bei einer vorteilhaften Ausführung der Vorrichtung nach der Erfindung besitzt die Klemmeinrichtung zwei langgestreckte Klemmschienen, zwischen denen die Becher in Erstreckungsrichtung hindurchbewegt werden. Diese Ausgestaltung hat den Vorteil, daß sie kontinuierlich transportierenden Becherfüllwerken zugeordnet werden kann und nicht nur für konische Becher, sondern auch für andere Becherformen einsetzbar ist. Als Fördermittel für die Bewegung der Becher zwischen den Klemmschienen hin kann die Transportvorrichtung des Becherfüllwerkes herangezogen werden. Diese Transportvorrichtung umfaßt normalerweise ein Zellenbrett, in dem die Becher in Reihen hängend bewegt werden. In einem solchen Fall genügt es, die ortsfesten Klemmglieder unterhalb der Transportvorrichtung in Transportrichtung anzuordnen und darüber die Meßeinrichtung vorzusehen. Diese Ausgestaltung eignet sich sowohl für den taktweisen als auch für kontinuierlichen Betrieb. Im letzten Fall muß allerdings der die Aufwölbung des Becherdeckels messende Taster oder Meßkopf der Meßeinrichtung synchron zum Transportvorschub bewegt werden.

Die erfindungsgemäße Prüfvorrichtung kann in Verbindung mit einem Becherfüllwerk, statt dessen aber auch selbständig verwendet werden, z.B. für eine spätere Überprüfung von Bechern, die das Füllwerk bereits verlassen haben. In solchen Fällen umfaßt die Prüfvorrichtung eigene Fördermittel, durch die die Becher z.B. horizontal bewegt werden. Die Becher können dabei ähnlich wie in einer Füll-bzw. Versiegelungsstation in Zellenbrettern aufgenommen sein; sie können aber z.B. auch auf Transportbändern stehend bewegt werden.

Der Abstand der Klemmglieder zueinander kann über die gesamte Länge der Klemmglieder konstant sein. Dies hat den Vorteil, daß man auch bei taktweisem Betrieb mehrere Becher gleichzeitig messen kann. Andererseits ist es jedoch auch möglich, den Abstand der Klemmglieder zueinander in Längsrichtung variierend auszubilden. Ein durch die Klemmglieder längs hindurchgeführter Becher würde dann eine zu- und abnehmende Verformung erfahren, was eine Art Pumpeffekt bewirkt und unter Umständen eine noch sicherere Aussage über die Deckeldichtigkeit erlaubt.

Die Klemmglieder können zumindest abschnittsweise mit zum Beispiel Gleitstücken oder Rollen versehen sein, die die Reibung zwischen ihnen und dem hindurchgeführten Becher verringern. Hierdurch wird der reibungsbedingte Abrieb der Becheraußenseite herabgesetzt und gleichzeitig der Antrieb der Transportvorrichtung bzw. der Fördermittel entlastet.

Eine besonders reibungsgünstige Ausgestaltung sieht Klemmglieder vor, die von in Bechertransportrichtung bewegbaren Endlosbändern gebildet sind. Ein zwischen solchen Endlosbändern verformter Becher wird nahezu reibungsfrei bewegt. In weiterer Ausgestaltung können die Endlosbänder unterhalb des Verformungsbereiches zurückgeführt werden, wo sie den Bechertransport nicht stören. Die Verwendung eines Endlosbandes hat den weiteren Vorteil, daß es jeweils auf beiden Seiten als Klemmglied dienen kann. Interessant ist dies insbesondere in Vorrichtungen, in denen die Becher in mehreren Reihen nebeneinander transportiert werden. Auch die zuvor beschriebenen Klemmglieder sind beidseitig benutzbar.

Unabhängig davon, ob es sich um separate oder in Verbindung mit Becherfüllwerken eingesetzte Dichtigkeitskontrollvorrichtungen handelt, können oberhalb der Klemmeinrichtung Niederhalter vorgesehen sein, die in Engriff mit gegenüberliegenden äußeren Bereichen des Deckels gelangen. Diese Niederhalter dienen dazu, den Becher während der Verformung in konstantem Eingriff mit den Klemmgliedern zu halten. Werden die Becher zwischen die Klemmglieder abgesenkt, müssen die Niederhalter ebenfalls vertikal bewegbar ausgebildet sein. Werden die Becher zwischen den Klemmgliedern in deren Längsrichtung hindurchbewegt, reichen ortsfeste Niederhalter, die z.B. als sich über die Länge der Klemmeinrichtung erstreckende Schienen ausgebildet sein können. Zur Reibungsverminderung ist es jedoch auch möglich, die Niederhalter im Kontaktbereich mit dem Becherrand mit reibungsvermindernden, z.B. rotierenden Teilen zu versehen. Die Niederhalter dienen dazu, ein Kippen der Becher beim Transport durch die Klemmeinrichtung zu verhindern, das dadurch entstehen kann, daß die vorwärtsbewegenden Fördermittel und die bremsende Klemmeinrichtung im Höhenabstand zueinander am Becher angreifen und dadurch ein Drehmoment in die Becher eintragen. Daher sind die Niederhalter vorteilhaft entgegen der Transportrichtung bis über den Einlaufbereich in die Klemmeinrichtung vorgezogen.

Im folgenden wird die Erfindung anhand von Zeichnungen, die mehrere Ausführungsbeispiele zeigen, näher erläutert. In der Zeichnung zeigen:
- Fig. 1: einen abgebrochenen Querschnitt durch eine erste Ausführung der Prüfvorrichtung nach der Erfindung,
- Fig. 2: eine Ansicht gemäß der Linie II-II in Fig. 1,
- Fig. 3: eine Ansicht ähnlich Fig. 2 auf eine zweite Ausführung, bei der die Klemmglieder als umlaufende Endlosbänder ausgebildet sind,
- Fig. 4: einen Schnitt entlang der Linie IV-IV in Fig.3,
- Fig. 5: eine vereinfachte Darstellung ähnlich Fig. 1 einer dritten Ausführung nach der Erfindung und
- Fig. 6 und 7: eine Seiten- und eine Stirnansicht eines abgewandelten Klemmgliedes.

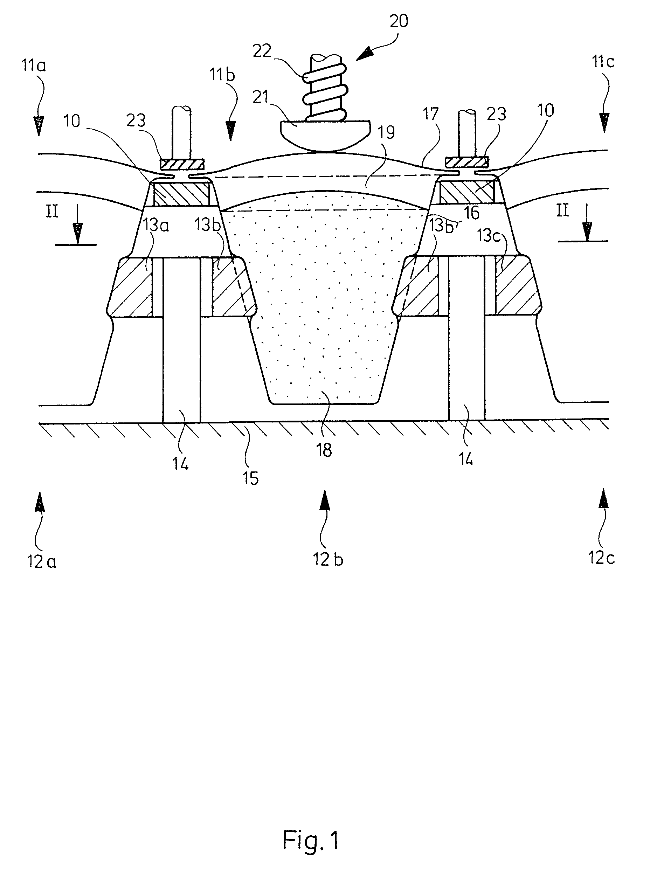

Fig. 1 zeigt mehrere in einem herkömmlichen Zellenbrett 10 angeordnete Becher 11a-c, die in Eingriff mit zugehörigen Klemmeinrichtungen 12a-c stehen. Aus Übersichtlichkeitsgründen zeigt die Zeichnung die Ausführung mit allen Einzelheiten nur für den Becher 11b; es versteht sich, daß die hier gezeigten Details in der tatsächlich arbeitenden Vorrichtung auch für die anderen Becher verwirklicht sind. Die dem Becher 11b zugeordnete Klemmeinrichtung 12b besitzt zwei sich senkrecht zur Zeichenebene erstreckende Klemmglieder 13b,13b', die auf Stützen 14 auf einer Grundplatte 15 montiert sind. Die im Schnitt dargestellten, langgestreckten Klemmglieder 13b,13b' sind als Klemmschienen ausgeführt, die einander paarweise im Abstand gegenüberliegend zugeordnet sind und zwischen sich einen Durchgang für die Becher 11b begrenzen. Die Klemmschienen 13b,13b' besitzen abgerundete Kanten, um eine Reibung zwischen ihnen und den Bechern herabzusetzen. Der Becher 11b besitzt Seitenwände 16, einen Deckel 17 und ist mit einem Füllgut 18 gefüllt, über dem sich ein Luftpolster 19 befindet. Durch die Klemmschienen 13b,13b' werden bei Durchlauf der Becher die Seitenwände 16 der Becher zusammengedrückt, und die dadurch bewirkte Verdrängung des Produktes 18 und des darüber befindlichen Luftpolsters 19 wölbt den Deckel 17 auf. In Fig. 1 zeigen die gestrichelten Linien im Becher 11b die Lage der Füllgutoberfläche und des Deckels 17 im unverformten Zustand.

Zur Messung der Aufwölbung kann während der Becherverformung ein Taster 20 einer nicht näher dargestellten Meßeinrichtung auf den Deckel 17 aufgesetzt sein, der ein Kontaktelement 21 aufweist, das über eine Feder 22 niedergedrückt wird und mit einer nicht gezeigten Auswertevorrichtung für seine Höhenlage verbunden ist. Anstelle des Tasters 20 kann auch ein anderer bekannter Meßkopf vorgesehen sein, der z.B. kontaktlos die Deckelaufwölbung und deren zeitliche Veränderung bestimmen kann.

Oberhalb des Zellenbrettes 10 angeordnete Niederhalter 23, die einen äußeren Bereich des Becherdeckels 17 übergreifen, sorgen dafür, daß der Becher während der Messung in korrekter Stellung verbleibt, d.h. weder kippt noch eine Aufwärtsverlagerung ausführt, die das Maß der Verformung verändern würden.

Das in Fig. 1 gezeigte Ausführungsbeispiel kann prinzipiell mit auch Zellenbrettern als Fördermitteln arbeiten, die die Becher von oben in die Klemmeinrichtung einführen oder aber wie dargestellt die Becher in Erstreckungsrichtung der Klemmglieder in Längsrichtung zwischen den Klemmgliedern hindurchführen. Im ersten Fall müssen die Niederhalter und die Meßköpfe bzw. Taster ebenfalls anheb- und absenkbar ausgebildet sein. Während bei der ersten Ausführung nur ein taktweiser Betrieb in Frage kommt, ist die zweite, dargestellte Ausführung sowohl bei taktweisem als auch bei kontinuierlichem Arbeitsmodus verwirklichbar. Für den kontinuierlichen Arbeitsmodus müssen dann jedoch die Meßköpfe synchron mit den Bechern in der Verformungsstrecke mitbewegbar ausgebildet sein. Statt dessen kann ein Meßkopf in Transportrichtung der Becher langgestreckt bzw. so ausgebildet sein, daß er bei in Transportrichtung feststehender Anordnung über die Meßstrecke mit dem bewegten Becher in Kontakt bleibt bzw. Meßergebnisse über dessen Deckelaufwölbung liefert.

Die Klemmeinrichtungen können je nach Länge und Ausbildung einem oder mehreren Bechern gleichzeitig zugeordnet sein. Die Klemmglieder können bis auf einen Ein- und Auslaufbereich über die gesamte Länge ihrer Klemmeinrichtung parallel ausgerichtet sein; es ist aber gleichfalls möglich, den Abstand zwischen ihnen zu variieren, so daß auf einen zwischen den Klemmgliedern hindurchgeführten Becher eine Art Pumpeffekt ausgeübt wird. Zur weiteren Herabsetzung der Reibung können die Klemmglieder anstelle einer mit abgerundeten Kanten versehenen Eingriffsfläche in diesem Bereich auch mehrere parallel angeordnete Klemmstangen aufweisen.

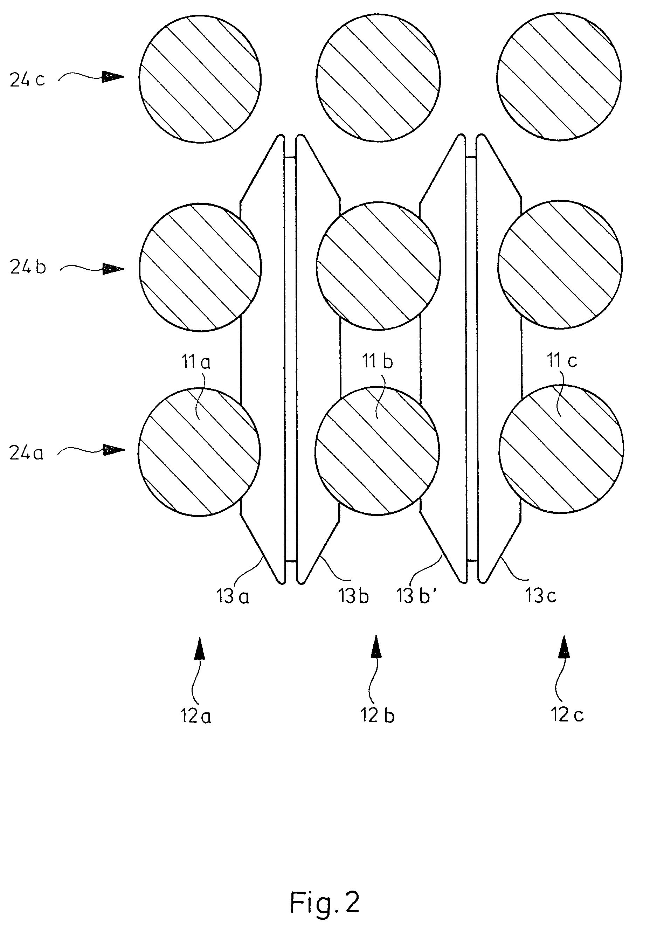

Die in Fig. 2 dargestellte Ansicht auf die Ausführung in Fig. 1 entlang der dort angedeuteten Linie II-II zeigt drei Querreihen 24a-c von Bechern, von denen zwei Reihen in Eingriff mit den Klemmeinrichtungen 12a-c stehen. Von den Klemmeinrichtungen 12a und 12c sind lediglich die der Klemmeinrichtung 12b benachbarten Klemmglieder 13a und 13c dargestellt, jedoch versteht sich, daß auch die Klemmeinrichtungen 12a und 12c je ein Paar Klemmglieder entsprechend den Klemmgliedern 13b,13b' der Klemmeinrichtung 12b aufweisen.

Man erkennt ferner, daß die Klemmglieder 13a,b,b',c sich zu ihren jeweiligen Enden hin verjüngen, was ein Einführen der Becher zwischen die Klemmglieder erleichtert.

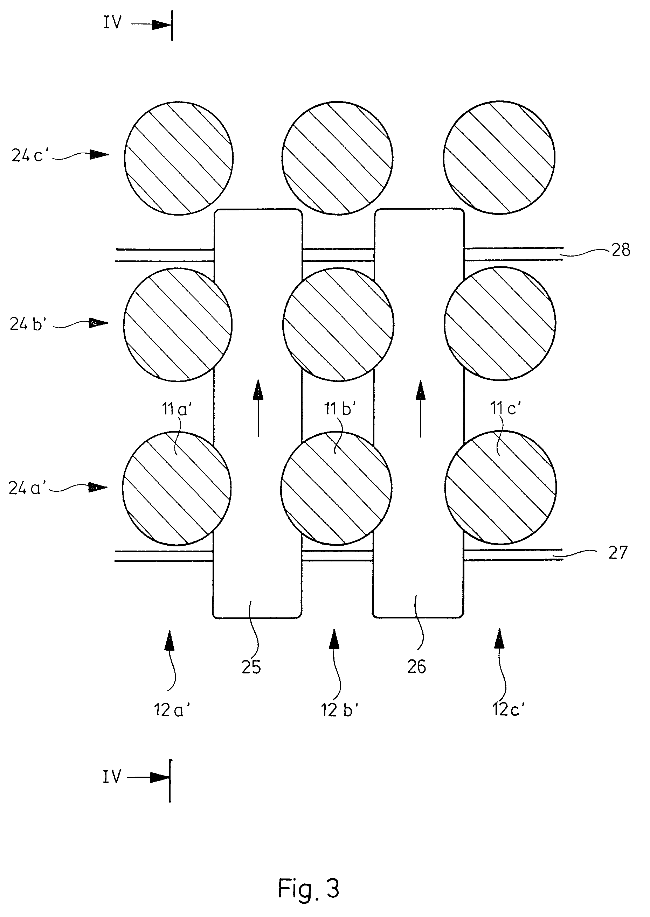

Fig. 3 zeigt eine ähnliche Ansicht wie Fig. 2 auf eine weitere Ausführung der Erfindung. Auch hier sind wieder drei Querreihen 24a'-c' von Bechern gezeigt, von denen zwei Reihen im Eingriff mit Klemmeinrichtungen 12a'-c' stehen. Bei dieser Ausführung dienen Endlosbänder 25 und 26 als doppelseitig verwendbare innere Klemmglieder, d.h. die Klemmeinrichtung 12b' z.B. arbeitet mit den einander zugewandten Bereichen der Bänder 25 und 26, der andere Klemmbereich der Bänder 25,26 gehört dann zu den Klemmeinrichtungen 12a' bzw. 12c', die ebenfalls mit außenliegenden weiteren Endlosbändern (nicht dargestellt) versehen sind. Die Endlosbänder 25 und 26 laufen in vertikalen Ebenen um.

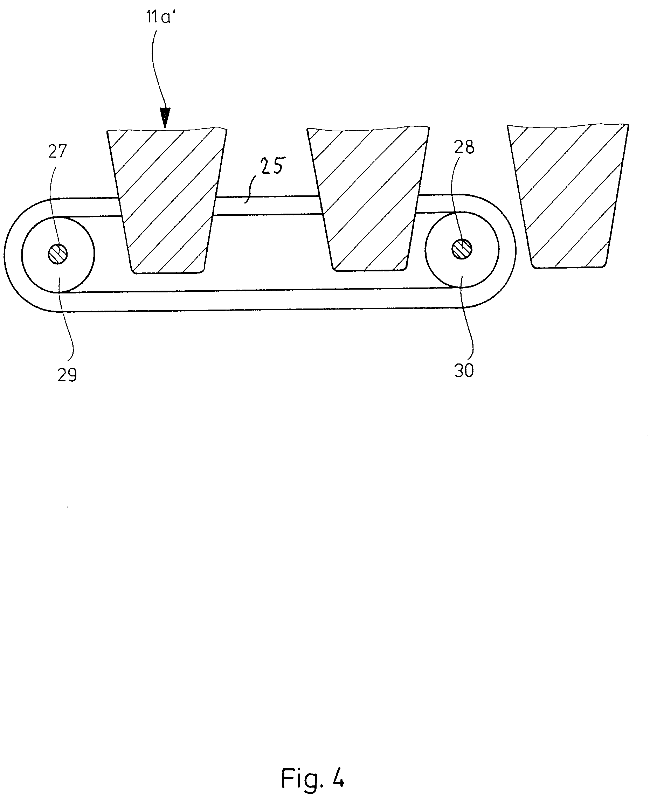

Fig. 4 zeigt eine seitliche Ansicht auf das Endlosband 25, das auf Rollen 29 und 30, die auf den Achsen 27 und 28 gelagert sind, geführt sind. Es ist notwendig, das Endlosband 25 unterhalb des Verformungsbereiches, in dem das obere Trum des Endlosbandes mit den Bechern in Klemmeingriff steht, zurückzuführen. Das untere Trum des Bandes ist dementsprechend in einem freien Bereich unterhalb der Becher angeordnet. Der Einsatz von Endlosbändern als Klemmelemente ist insbesondere dann vorteilhaft, wenn die Becher horizontal durch die Klemmeinrichtungen bewegt werden. In diesem Fall wird die Reibung zwischen einer Klemmeinrichtung und den Bechern deutlich verringert.

Wie Fig. 1 zeigt, werden die Becher wie beispielsweise der Becher 11b in ihrem oberen Randbereich vom Zellenbrett 10 transportiert. Wesentlich tiefer, nämlich etwa auf halber Höhe, greift die Klemmeinrichtung 12b mit den Klemmgliedern 13b und 13b' an, die aufgrund Reibung auf den Becher eine bremsende, also rückwärtsgerichtete Kraft ausüben. Die Becher könnten also kippen, und zwar insbesondere beim Einlaufen zwischen die Klemmglieder. Daher sind vorteilhaft die Niederhalter 23 langgestreckt ausgebildet und so weit vorgezogen, daß sie entgegen der Transportrichtung bis zum Anfang der Klemmglieder reichen. Die Niederhalter 23 halten die Becher fest auf dem Zellenbrett und verhindern das Kippen sowie eine Aufwärtsbewegung der Becher.

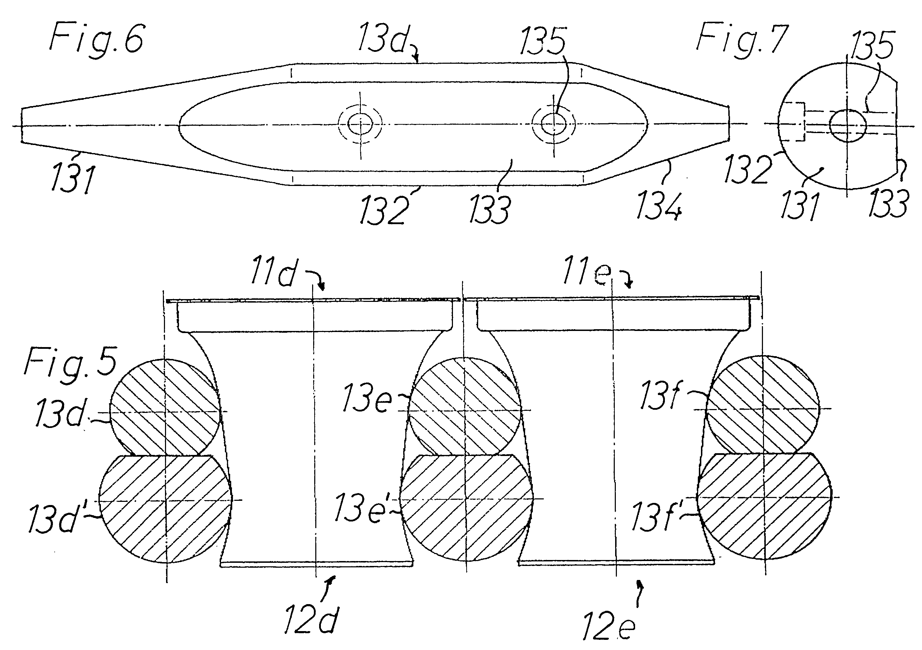

Die Fig. 5 veranschaulicht eine dritte Ausführungsform der Prüfvorrichtung nach der Erfindung mit abgewandelten Klemmgliedern 13d,13d',13e,13e',13f und 13f'. Die Klemmglieder 13d,13d',13e und 13e' gehören zu einer Klemmeinrichtung 12d für eine Reihe von Bechern 11d, und die Klemmglieder 13e,13e',13f und 13f' gehören zu einer Klemmeinrichtung 12e für eine Reihe von Bechern 11e. Es versteht sich, daß die Prüfvorrichtung ebenso für eine einzelne Reihe von Bechern wie für drei, vier, fünf und mehr Reihen von Bechern ausgelegt sein kann. Die jeweils zwischen zwei Becherreihen 11d und 11e angeordneten Klemmglieder 13e, 13e' wirken doppelseitig. Dies gilt auch für die Klemmglieder 13d,13d' bzw. 13f,13f' für den Fall, daß die Vorrichtung für drei bzw. vier Reihen von Bechern ausgelegt wird.

Anstelle eines einzelnen Klemmgliedes für jede Becherseite sind bei der Ausführung nach Fig. 5 je zwei übereinander angeordnete Klemmglieder vorgesehen, die vorzugsweise im Durchmesser abgestuft sind. Entsprechend der Konizität der Becher hat das obere Klemmglied 13d,13e,13f einen geringeren Durchmesser bzw. eine geringere Querabmessung als die unteren Klemmglieder 13d',13e' und 13f'. Die Verwendung von jeweils zwei je Becherseite wirksamen Klemmgliedern ermöglicht eine relativ starke Verformung bei dennoch im wesentlichen nur linienförmigem Eingriff zwischen der Becherwand und den Klemmgliedern, so daß bei günstigen Reibverhältnissen auch bei größeren Bechervolumen ein Verformungsmaß erzeugt werden kann, wie es für eine meßtechnisch erwünschte Aufwölbung des Deckels erwünscht ist.

Die Klemmglieder sind, bis auf unterschiedliche Maße, untereinander formgleich und bestehen, wie das die Fig. 6 und 7 für das Beispiel des Klemmgliedes 13d erkennen läßt, aus Rundstäben mit einem zylindrischen Hauptteil 132, der einseitig mit einer Abflachung 133 versehen ist. An seinem den Bechern in Transportrichtung zugewandten vorderen Endeteil 131 besitzt der Rundstab eine kreiskegelige Ausbildung, die einen Bechereinlaufbereich definiert, und am in Transportrichtung der Becher rückwärtigen Ende hat jeder Rundstab ebenfalls einen kreiskegeligen Endteil 134, der einen Auslaufbereich bildet. Bohrungen 135 ermöglichen es, die Klemmglieder auf Stützen 14 abzustützen, wobei es sich versteht, daß die Klemmglieder in der Höhe und in ihrem gegenseitigen Abstand veränderbar abgestützt werden können, um eine Anpassung an unterschiedliche Becherabmessungen und -formen durchführen zu können.

Im dargestellten Ausführungsbeispiel ist die Prüfvorrichtung eine gesonderte Einheit mit eigenen Fördernmitteln. Sie kann jedoch auch beispielsweise an die Versiegelungseinrichtung eines Becherfüllwerkes angeschlossen werden, in der die Deckel auf die Becher aufgesiegelt werden. In diesem Falle kann die Transportvorrichtung des Becherfüllwerkes auch als Fördermittel für die Prüfvorrichtung dienen.

## Patentansprüche

1. Vorrichtung zur Prüfung der Dichtigkeit von mit einem Füllgut befüllten und mit einem Deckel (17) verschlossenen Bechern (11a-e), deren Seitenwände (16) und Deckel (17) aus elastisch verformbarem Material bestehen, mit einer Klemmeinrichtung (12a-e) zur zeitweiligen, gleichförmigen Verformung der Becherseitenwände (16) und mit einer den Becherdeckeln (17) zugeordneten Meßeinrichtung (20), die den Grad der Deckelwölbung während der zeitweiligen Verformung der Becher (11a-e) mißt, **dadurch gekennzeichnet**, daß die Klemmeinrichtung (12a-e,12a'-12c') zumindest zwei ortsfest entlang eines Werkstücks einer Becherförderstrecke angeordnete, einander paarweise im Abstand gegenüberliegende Klemmglieder (13a-e,13b',25,26) aufweist, deren Abstand zueinander zumindest bereichsweise geringer als der Außendurchmesser der Becher (11a-11e) in Höhe der Klemmglieder ist, und daß Fördermittel (10) vorgesehen sind, die die Becher (11a-11e) zur zeitweiligen Verformung zwischen die Klemmglieder (13a-e,13b',25,26) bewegen.

2. Vorrichtung nach Anspruch 1 für Becher mit im wesentlichen nach unten konisch zulaufenden Seitenwänden, **dadurch gekennzeichnet**, daß Fördermittel vorgesehen sind, die die Becher (11a-e) in Richtung der Becherachse zwischen die Klemmglieder (13a-e,13',25,26) bewegen.

3. Vorrichtung nach Anspruch 1, **dadurch gekennzeichnet**, daß die Klemmeinrichtung (12a-e; 12a'-c') zwei langgestreckte schienenförmige Klemmglieder (13a-e,13') aufweist, zwischen denen die Becher (11a-e) in Erstreckungsrichtung der Klemmglieder hindurchbeweglich sind.

4. Vorrichtung nach Anspruch 3, **dadurch gekennzeichnet**, daß die Klemmeinrichtung (12a-e) trichterförmige Einlaufbereiche für die Becher aufweist.

5. Vorrichtung nach Anspruch 3 oder 4, **dadurch gekennzeichnet**, daß der Abstand der Klemmglieder (13a-e,13',25,26) zueinander über die gesamte Länge der Verformungsstrecke konstant ist.

6. Vorrichtung nach Anspruch 3 oder 4, **dadurch gekennzeichnet**, daß der Abstand der Klemmglieder zueinander innerhalb der Verformungsstrecke in Bewegungsrichtung abwechselnd zu- und abnimmt.

7. Vorrichtung nach einem der Ansprüche 1 bis 6, **dadurch gekennzeichnet**, daß die Klemmglieder (13a-e,13') zumindest abschnittsweise Rollen oder Gleitstücke zur Herabsetzung der Reibung zwischen ihnen und den hindurchgeführten Bechern (11a-e) aufweisen.

8. Vorrichtung nach Anspruch 7, **dadurch gekennzeichnet**, daß die Klemmglieder von mit ihrem oberen Trum in Bechertransportrichtung vorlaufenden Endlosbändern (25,26) gebildet sind.

9. Vorrichtung nach Anspruch 8, **dadurch gekennzeichnet**, daß die Endlosbänder (25,26) unterhalb des Verformungsbereiches zurücklaufen.

10. Vorrichtung nach den Ansprüchen 1-9, **dadurch gekennzeichnet**, daß Haltevorrichtungen (23) vorgesehen sind, die die Becher während des Meßvorganges in konstantem Klemmeingriff halten.

11. Vorrichtung nach Anspruch 10, **dadurch gekennzeichnet**, daß oberhalb der Klemmeinrichtung (12a-e) Niederhalter (23) vorgesehen sind, die langgestreckt und parallel zu den Klemmgliedern (13a-e,13',25,26) ausgerichtet sind und in Eingriff mit gegenüberliegenden, äußeren Bereichen des Deckels (17) eines in die Klemmeinrichtung (12a-e) bewegten Bechers (11a-e) gelangen.

12. Vorrichtung nach einem der Ansprüche 1 bis 11, **dadurch gekennzeichnet**, daß die Klemmglieder (13a-e,13',25,26) höhenverstellbar abgestützt sind.

13. Vorrichtung nach einem der Ansprüche 1 bis 12, **dadurch gekennzeichnet**, daß die Klemmglieder (13a-e,13',25,26) in ihrem gegenseitigen Abstand einstellbar abgestützt sind.

14. Vorrichtung nach einem der Ansprüche 1 bis 13, **dadurch gekennzeichnet**, daß jeder Becherseitenwand (16) zwei übereinander angeordnete Klemmglieder (13d-f,13d'-f') zugeordnet sind.

15. Vorrichtung nach einem der Ansprüche 1 bis 14, **dadurch gekennzeichnet**, daß die Klemmglieder (13d-f,13d'-f') abgestufte Durchmesser bzw. Abmessungen quer zur Transportrichtung der Becher (11a-e) aufweisen.

16. Vorrichtung nach einem der Ansprüche 1 bis 15, **dadurch gekennzeichnet**, daß die Klemmglieder (13d-f,13d'-f') als Rundstäbe mit einem Hauptteil (132) gleichbleibenden Durchmessers und kreiskegelig zulaufenden vorderen und rückwärtigen Endteilen (131,134) ausgebildet sind.

17. Vorrichtung nach einem der Ansprüche 14 bis 16, **dadurch gekennzeichnet**, daß die Rundstäbe einseitige Abflächungen (133) aufweisen, mit denen sie aneinanderliegend Anordnung finden.
